Europäisches Patentamt

European Patent Office

Office europeen des brevets

(19)

(11) Numéro de publication: **0 201 403**
**B1**

(12) FASCICULE DE BREVET EUROPEEN

(45) Date de publication du fascicule du brevet:
18.10.89

(51) Int. Cl.⁴: **B26D 3/16**

(21) Numéro de dépôt: 86400890.9

(22) Date de dépôt: 23.04.86

ERRATUM

| (SEITE, SPALTE, ZEILE)<br>(PAGE, COLUMN, LINE)<br>(PAGE, COLONNE, LIGNE) | | | |
|---|---|---|---|

| DIE TEXTSTELLE :<br>TEXT PUBLISHED :<br>LE PASSAGE SUIVANT : | | | | LAUTET BERICHTIGT:<br>SHOULD READ :<br>DEVRAIT ETRE LU : |
|---|---|---|---|---|
| la traverser complètement et rencontrer | 2 | 1 | 26/27 | la traverser complètement et généralement recontrer |
| soir et l'escomptage | 3 | 4 | 5 | soir et l'escamotage |
| $17_a$-$17_d$ une prise d'aspiration 18, im groupe | 3 | 4 | 56 | $17_a$-$17_d$, une prise d'aspiration 18, un groupe |
| avec le micro-contacts | 4 | 5 | 6 | avec les micro-contracts |
| repérage intérieure (3). | 5 | 7 | 19 | repérage intérieurs (3). |
| tronçonneuse de tubes | 5 | 7 | 20 | tronçonnage de tubes |
| un couteau (8), | 5 | 7 | 23 | un couteau (7), |
| pour pouser | 5 | 7 | 24 | pour pousser |

| Tag der Entscheidung über die Berichtigung<br>Date of decision on rectification:<br>Date de décision portant sur modification: | ) ) ) ) ) | 03.01.90 | Ausgabe- und Veröffentlichungstag:<br>Issue and publication date:<br>Date d'edition et de publication: | ) ) ) ) ) | 21.03.90 | Patbl.Nr)<br><br>EPB no:) 90/12<br><br>Bull. no:) |
|---|---|---|---|---|---|---|

Europäisches Patentamt

European Patent Office

Office européen des brevets

(19)

(11) Numéro de publication: **0 201 403**
**B1**

(12) # FASCICULE DE BREVET EUROPEEN

(45) Date de publication du fascicule du brevet:
**18.10.89**

(21) Numéro de dépôt: **86400890.9**

(22) Date de dépôt: **23.04.86**

(51) Int. Cl.⁴: **B26D 3/16**

(54) Tronçonneuse de tubes et procédé de tronçonnage.

(30) Priorité: **06.05.85 FR 8506868**

(43) Date de publication de la demande:
**17.12.86 Bulletin 86/46**

(45) Mention de la délivrance du brevet:
**18.10.89 Bulletin 89/42**

(84) Etats contractants désignés:
**BE CH DE GB IT LI LU NL SE**

(56) Documents cités:
**GB-A- 1 390 022**
**US-A- 2 521 004**
**US-A- 3 161 097**
**US-A- 3 185 005**

(73) Titulaire: **LHOMME SA (Société anonyme), Route de Paris, F-89140 Pont sur Yonne(FR)**

(72) Inventeur: **Languillat, Jean-Paul, Vallières, F-89260 Thorigny-sur-Oreuse(FR)**

(74) Mandataire: **Chambon, Gérard, Cabinet Chambon 6 et 8 avenue Salvador Allende, F-93804 Epinay-sur-Seine Cédex(FR)**

ACTORUM AG

## Description

L'invention concerne une tronçonneuse et un procédé de tronçonnage de tubes et plus particulièrement de tubes en carton ou en matière plastique. Cette tronçonneuse de tubes comportant un mandrin support, un moyen d'entraînement en rotation du tube à tronçonner, au moins un couteau disposé de manière fixe longitudinalement à proximité de l'extrémité libre du mandrin, un poussoir monté coulissant sur le mandrin pour pousser le tube et une butée extérieure dont la distance par rapport au couteau est réglable (voir US-A 2 521 004).

Une tronçonneuse de tubes connue, par exemple du type décrit dans le brevet US-A 2 521 004, comporte un mandrin qui est monté en porte à faux sur un bâti et dont au moins la surface extérieure est fixe, tandis qu'au moins un couteau est aménagé à proximité de l'extrémité libre du mandrin.

Pour tronçonner un tube, celui-ci est introduit sur le mandrin dont le diamètre extérieur est au plus égal au diamètre intérieur du tube, puis ledit tube est entraîné en rotation tandis que le couteau, porté par exemple par un chariot, est actionné perpendiculairement audit tube pour pénétrer dans la paroi de ce dernier, jusqu'à la traverser complètement et rencontrer une contrepartie ou contre couteau dur prévu sur le mandrin.

Le mandrin étant fixe, pour entraîner le tube en rotation, ledit mandrin comporte par exemple une partie expansible, rétractile et motorisée en rotation qui entraîne le tube en rotation et le fixe en translation par forçage et grippage de la paroi intérieure du tube.

La partie expansible du mandrin est aménagée au voisinage de son extrémité libre, à proximité de la zone de coupe, mais généralement après cette dernière en partant de ladite extrémité, contrairement au dispositif montré dans le brevet US Précité, pour notamment permettre une longueur minimale de coupe la plus réduite possible et/ou éviter certains risques d'arrachement en fin de coupe.

Pour permettre de couper des tronçons aux longueurs désirées et éjecter ensuite les tronçons coupés, la tronçonneuse comporte un poussoir sous forme d'une bague qui est montée de manière coulissante le long du mandrin, ainsi qu'une butée extérieure escamotable qui est en outre réglable longitudinalement.

Le réglage de la position longitudinale de la butée permet de régler et de connaître la longueur comprise entre le couteau et ladite butée.

Après le réglage de la butée, le poussoir sollicite le tube contre ladite butée sous une certaine pression (au moyen par exemple d'un ressort) et on peut effectuer la coupe d'un tronçon à la longueur choisie, puis éjecter ledit tronçon obtenu en agissant sur le poussoir après avoir escamoté la butée extérieure et rétracté la partie expansible du mandrin.

Dans ce type de tronçonneuse, la partie expansible tourne en permanence et il est clair qu'après l'expansion de cette partie, les tranches d'extrémité du tube qui est entraîné en rotation, frottent respectivement sur la butée extérieure et sur le poussoir de telle sorte que lesdites tranches risquent pour le moins d'être endommagées.

En outre, la partie expansible étant disposée en avant du couteau, en partant de l'extrémité libre du mandrin comme déjà dit, pour couper le dernier tronçon il est nécessaire d'avoir une partie du tube sur le mandrin dont la longueur minimale correspond à la distance comprise entre le couteau et l'extrémité intérieure de la partie expansible. Il est clair que cette longueur de tube représente un déchet technique obligatoire de plusieurs centimètres.

De plus, si dans le meilleur des cas, la partie du tube sur le mandrin est réduite pratiquement au déchet technique, le tronçon à couper qui fait saillie du mandrin est peu ou mal tenu par le reste du tube sur le mandrin de telle sorte que l'on constate dans ce cas des défauts d'équerrage, le tube se positionnant légèrement en biais.

En fait, la chute perdue est donc plus importante encore que le déchet technique. Dans tous les cas, la chute se trouve à l'extrémité du tube et il est donc impossible de récupérer un tronçon muni de cette tranche d'extrémité.

Enfin, la plus grande longueur mesurable d'un tronçon correspond à l'écartement maximal de la butée extérieure par rapport au couteau.

Dans certains cas, les tranches des tubes à tronçonner et qui proviennent généralement d'un premier tronçonnage d'un tube brut fabriqué en continu, peuvent être intéressantes à conserver sur deux des tronçons à réaliser lorsque lesdites tranches sont de bonne qualité et/ou qu'elles ont subi un traitement spécifique (encochage, vernissage, coloration, bouterollage).

Les tubes à tronçonner peuvent en outre avoir subi un traitement de surface destiné à durcir cette surface de telle sorte que leur tronçonnage est plus délicat à faire que sur le tube brut, d'où l'intérêt de conserver dans les tronçons les deux tranches d'extrémité du tube à tronçonner.

Pour atteindre ce but, (conservation des tranches), pour réduire la chute et rendre en outre possible la coupe d'un tronçon de longueur sensiblement égale à la longueur du mandrin, l'inventeur préconise une tronçonneuse et un procédé perfectionnés à partir d'un système du type mentionné ci-avant, et qui est notamment muni d'au moins un couteau disposé de manière fixe longitudinalement à proximité de l'extrémité libre du mandrin, contrairement aux systèmes selon lesquels c'est le couteau qui est mû longitudinalement devant le tube fixe en position, comme décrit par exemple dans le brevet US-A 3 185 005.

Une tronçonneuse selon l'invention est remarquable en ce qu'elle comporte en outre au moins un système de repérage intérieur qui est pourvu d'un équipage monté mobile et réglable en position longitudinale devant un moyen de mesure pour déterminer des longueurs connues et réglables entre l'extrémité antérieure du poussoir et le couteau, ce système de repérage étant aussi muni de moyens pour stopper le déplacement longitudinal du poussoir de manière à déterminer au moins un tronçon de longueur choisie ainsi qu'un dernier tronçon dont l'une des tranches est confondue avec l'une des tranches d'extrémité du tube à tronçonner.

De préférence, le système de repérage comporte aussi au moins un micro-contact ou respectivement une saillie destiné à coopérer avec une saillie ou respectivement un micro-contact solidaire en translation du poussoir pour commander l'arrêt des moyens d'entraînement de ce dernier.

Selon un mode de réalisation, l'équipage mobile du système de repérage comporte deux micro-contacts successifs dans le sens de l'avancement du poussoir ou respectivement deux saillies, le plus près dudit poussoir étant destiné à commander une avance lente dudit poussoir et l'autre, l'arrêt des moyens d'entraînement de ce dernier.

Avantageusement, ledit équipage mobile du système de repérage comporte en outre une butée éventuellement escamotable qui est aménagée de manière telle qu'une partie en saillie du poussoir vienne au contact de ladite butée légèrement après la coopération des moyens d'arrêt des moyens d'entraînement du poussoir, des moyens de temporisation étant prévus pour retarder légèrement la commande d'arrêt.

Un mode de réalisation plus complexe peut comporter plusieurs systèmes de repérage intérieurs.

L'invention concerne aussi un procédé de tronçonnage au moyen d'une tronçonneuse du type précité et qui est remarquable en ce qu'il consiste à:

a) couper éventuellement un ou plusieurs tronçons par repérage des longueurs au moyen de la butée extérieure,

b) couper au moins le dernier tronçon par repérage de la longueur au moyen du système de repérage intérieur.

Selon une variante, l'opération b) consiste à couper une chute par repérage au moyen du système de repérage intérieur, en réglant ledit système à une longueur représentant la somme des longueurs des tronçons restant à couper et à tronçonner à chaque fois un tronçon en déplaçant le système de repérage vers l'extrémité du mandrin d'une longueur égale à la longueur désirée d'un tronçon et ainsi de suite, le dernier tronçon étant formé par le tube résiduel qui reste après le tronçonnage de l'avant-dernier tronçon.

Un procédé original utilisant une tronçonneuse munie de plusieurs systèmes de repérage est remarquable en ce qu'il consiste à effectuer l'opération b) de la manière suivante:

b1) régler un premier système de repérage intérieur à une longueur représentant la somme des longueurs des tronçons restant à couper,

b2) régler un deuxième système de repérage intérieur à une distance du premier qui est égale à la longueur désirée d'un tronçon et ainsi de suite jusqu'au dernier système qui est réglé à la longueur du dernier tronçon désiré,

b3) couper une chute résiduelle par repérage sur le premier système,

b4) tronçonner les divers tronçons en avançant le poussoir dont les arrêts sont commandés par chacun des systèmes de repérage qui se suivent.

Avantageusement dans tous les cas, le tube à tronçonner est mis en rotation seulement après: son blocage en position sur une partie de fixation et de rotation du mandrin, la mise hors pression du poussoir et l'escomptage de la butée extérieure lorsque celle-ci est utilisée.

L'invention sera bien comprise et d'autres particularités apparaîtront à la lecture de la description qui va suivre et qui se réfère aux dessins annexés dans lesquels:

– la figure 1 montre en élévation une tronçonneuse selon l'invention,

– la figure 2 est une coupe transversale simplifiée et à plus grande échelle, selon II–II de la figure 1.

La tronçonneuse selon l'invention comporte de manière connue un mandrin 1 monté en porte à faux sur un bâti 2.

Le mandrin 1 (non représenté plus en détail) comporte un fourreau extérieur fixe et au voisinage de son extrémité libre, une partie expansible et rétractile 3. Le dispositif 3 peut être expansé ou rétracté par des moyens aménagés à l'intérieur du mandrin et mis en rotation au moyen d'une transmission 4 mue par un moteur 5.

A proximité de l'extrémité libre du mandrin, est aménagé un dispositif de coupe 6 muni d'un couteau 7 circulaire, fixe ou motorisé, ou encore libre en rotation, et qui est disposé plus près de l'extrémité libre du mandrin que ne l'est le dispositif 3. Le couteau 7 est par exemple monté sur un chariot mu transversalement au tube ou de préférence monté sur un support pivotant mu par un vérin.

Sur le mandrin 1, est monté un poussoir tubulaire 8, coulissant longitudinalement et qui est entraîné en translation par un système d'entraînement muni ici d'un moyen d'attelage 9 et d'une courroie crantée 10.

A l'extérieur du mandrin, est prévue une butée escamotable 11 qui est réglable en distance par rapport au couteau 7 au moyen d'un volant de réglage 12.

La tronçonneuse selon l'invention comporte un système de repérage ou de référence intérieur 13 muni d'un équipage mobile qui est aménagé de manière coulissante parallèlement au mandrin 1. Ledit système de repérage 13 est pourvu d'un moyen de déplacement, comprenant par exemple un volant 14, et comporte un repère 15 qui se déplace devant une réglette 16. La réglette 16 est graduée pour indiquer la longueur comprise entre l'extrémité antérieure du poussoir 8 et le couteau 7.

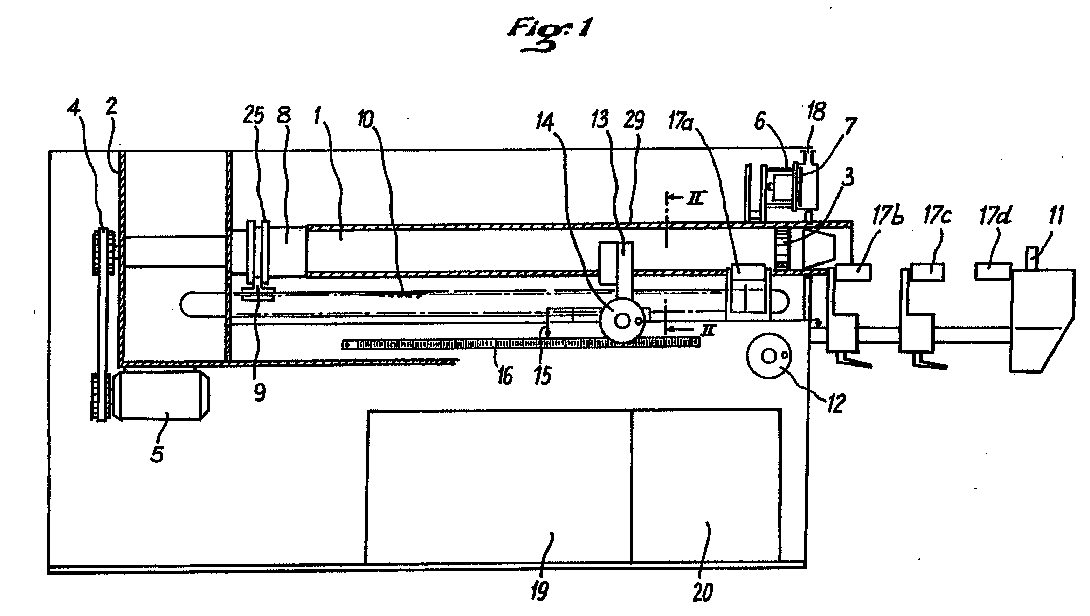

La tronçonneuse représentée sur la figure 1 comporte en outre des rouleaux de maintien et de guidage 17$_a$–17$_d$ une prise d'aspiration 18, im groupe hydraulique 19 et des moyens d'asservissement 20.

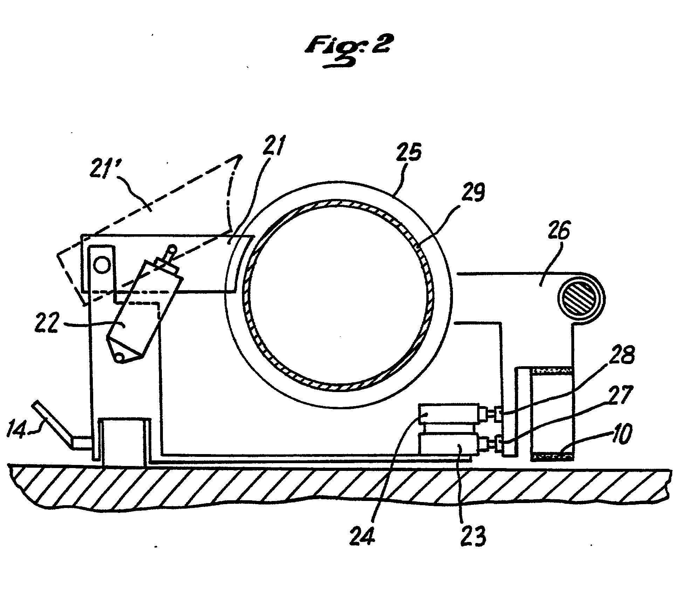

Le système de repérage 13 vu plus en détail à la figure 2 comporte une butée 21 pivotante qui est actionnable par un vérin 22, ainsi que deux micro-contacts consécutifs 23 et 24 solidaires en translation de la butée 21.

Le poussoir 8 (figure 1) est pourvu d'au moins une saillie annulaire 25 dans sa partie arrière (figures 1 et 2) tandis qu'il est entraîné en translation par la courroie 10 déjà mentionnée et l'intermédiaire d'un attelage coulissant 26 (figure 2) dont l'élément 9 vu sur la figure 1 fait partie.

L'attelage 26 comporte en outre deux saillies 27, 28 destinées à coopérer avec le micro-contacts 23 et 24.

Le micro-contact 23 lorsqu'il est actionné par la saillie 27 commande une avance lente des moyens d'entraînement du poussoir 8 tandis que le micro-contact 24 en commande l'arrêt.

Les dispositions de la butée 21 et des micro-contacts 23 et 24 sont telles que la saillie 25 du poussoir 8 ne viendra au contact de la butée 21 que légèrement après l'actionnement du micro-contact 23 par la saillie 27, la commande d'arrêt des moyens d'entraînement du poussoir 8 étant légèrement différée par temporisation pour permettre audit poussoir d'arriver jusqu'à ladite butée 21.

Les graduations de la réglette 16 sont faites comme déjà dit, pour indiquer la distance exacte entre l'extrémité antérieure du poussoir 8 et le couteau 7, la mesure étant calculée lorsque la saillie 25 est au contact de la butée 21.

Le tube à tronçonner, représenté en coupe sur les figures 1 et 2 et référencé 29, est d'abord disposé sur le mandrin 1.

On coupe alors éventuellement un ou plusieurs tronçons en référence sur la butée extérieure 11, qui présente de préférence une grande surface, en réglant celle-ci et en poussant le tube 29 au moyen du poussoir 8, la partie extérieure du tube étant guidée et soutenue par les rouleaux 17$_b$ à 17$_d$.

La partie expansible 3 bloque le tube en position après sa mise en place, mais sa rotation ne sera commandée qu'après l'escamotage de la butée 11 et la mise hors pression du poussoir 8.

Il est clair qu'au moment de la coupe par l'actionnement du couteau 7, le tube 29 est entraîné en rotation mais ses tranches d'extrémité ne sont pas endommagées puisque la butée 11 est escamotée et le poussoir 8 est hors pression.

Après ce premier tronçonnage, le tube restant est coupé selon un ou plusieurs tronçons au moyen du système de repérage 13.

Après la coupe éventuelle d'une chute, le système 13 est réglé sur la longueur désirée et le tube est poussé par le poussoir 8 jusqu'à venir au contact de la butée 21, le micro-contact 24 assurant une approche en vitesse lente et le micro-contact 23 stoppant cet avancement avec une légère temporisation.

Ici encore, la mise en rotation du tube 29 est effectuée après le blocage dudit tube et après la mise hors pression du poussoir 8 de manière à ce que la tranche d'extrémité intérieure puisse tourner librement.

Chaque tronçon ainsi coupé peut être facilement éjecté après escamotage de la butée 21 par le vérin 22 (position 21' sur la figure 2) et bien sûr la rétractation de la partie 3 du mandrin 1.

Avec une tronçonneuse selon l'invention, il est clair que les tranches du tube 29 sont conservées et on les retrouvent, l'une sur le premier tronçon coupé par repérage sur la butée extérieure 11 et l'autre sur le dernier tronçon coupé par repérage au moyen du système 13, la chute étant alors réalisée dans une zone médiane du tube au moment de la première coupe par repérage avec le système 13, cette chute pouvant ainsi être réduite au minimum puisqu'elle dépend uniquement de la longueur entre le tube 29 de départ et la longueur totale des tronçons désirés (il n'y a pas de déchet technique comme dans l'art connu étant donné la place du couteau).

D'une manière générale on utilise le système 13 pour couper seulement le dernier tronçon mais comme déjà dit, si on désire réaliser plusieurs tronçons au moyen dudit système de repérage 13, il est facile de déplacer le système au fur et à mesure (éventuellement de manière programmable) après la coupe d'une première chute destinée à obtenir une longueur restante égale à la somme des longueurs de tous les tronçons désirés.

En outre, la tronçonneuse décrite peut bien sûr comporter plusieurs systèmes de repérage 13. Avec un tel dispositif on peut alors faire comme précédemment, mais au lieu de déplacer le système 13, les divers systèmes sont disposés aux longueurs voulues, le premier représentant la longueur totale des tronçons.

L'invention présente de nombreux avantages, comme déjà dit: grands tronçons possibles sans problème d'équerrage, chutes minimales, conservation des tranches d'extrémité.

## Revendications

1. Tronçonneuse de tubes comportant un mandrin support (1), un moyen d'entraînement en rotation (3) du tube (29) à tronçonner, au moins un couteau (7) disposé de manière fixe longitudinalement à proximité de l'extrémité libre du mandrin, un poussoir (8) monté coulissant sur le mandrin pour pousser le tube et une butée (11) extérieure dont la distance par rapport au couteau est réglable, tronçonneuse caractérisée en ce qu'elle comporte en outre au moins un système de repérage intérieur (13) qui est pourvu d'un équipage monté mobile et réglable en position longitudinale devant un moyen de mesure (15, 16) pour déterminer des longueurs connues et réglables entre l'extrémité antérieure du poussoir (8) et le couteau (7), ce système de repérage étant aussi muni de moyens pour stopper le déplacement longitudinal du poussoir de manière à déterminer au moins un tronçon de longueur choisie ainsi qu'un dernier tronçon dont l'une des tranches est confondue avec l'une des tranches d'extrémité du tube (29) à tronçonner.

2. Tronçonneuse selon la revendication 1, caractérisée en ce que le système de repérage (13) comporte aussi au moins un micro-contact (23) ou respectivement une saillie destiné à coopérer avec une saillie (27) ou respectivement un micro-contact solidaire en translation du poussoir (8) pour commander l'arrêt des moyens d'entraînement de ce dernier.

3. Tronçonneuse selon la revendication 2, caractérisée en ce que l'équipage mobile du système de repérage comporte deux micro-contacts (23 et 24) successifs dans le sens de l'avancement du poussoir (8) ou respectivement deux saillies, le microcontact (24) le plus près dudit poussoir (8) étant destiné à commander une avance lente dudit poussoir et l'autre (23), l'arrêt des moyens d'entraînement de ce dernier.

4. Tronçonneuse selon l'une des revendications 2 et 3, caractérisée en ce que l'équipage mobile du système de repérage (13) comporte en outre une butée (21) éventuellement escamotable qui est aménagée de manière telle qu'une partie en saillie (25) du poussoir (8) vienne au contact de ladite butée légèrement après la coopération des moyens d'arrêt (23, 27) des moyens d'entraînement du poussoir (8), des moyens de temporisation étant prévus pour retarder légèrement la commande d'arrêt.

5. Tronçonneuse selon l'une des revendications 1 à 4, caractérisée en ce qu'elle comporte plusieurs systèmes de repérage intérieur (3).

6. Procédé de tronçonneuse de tubes au moyen d'une tronçonneuse comportant un mandrin support (1), un moyen d'entraînement en rotation (3) du tube (29) à tronçonner, au moins un couteau (8), un poussoir (8) monté coulissant sur le mandrin pour pouser le tube, une butée (11) extérieure dont la distance par rapport au couteau est réglable, et au moins un système de repérage intérieur (13) déterminant des longueurs connues et réglables entre l'extrémité antérieure du poussoir (8) et le couteau (7), procédé consistant à:

a) couper éventuellement un ou plusieurs tronçons par repérage des longueurs au moyen de la butée extérieure (11),

b) couper au moins le dernier tronçon par repérage de la longueur au moyen du système de repérage intérieur (13).

7. Procédé de tronçonnage selon la revendication 6, où l'opération b) consiste à couper une chute par repérage au moyen du système de repérage intérieur (13), en réglant ledit système à une longueur représentant la somme des longueurs des tronçons restant à couper et à tronçonner à chaque fois un tronçon en déplaçant le système de repérage vers l'extrémité du mandrin (1) d'une longueur égale à la longueur désirée d'un tronçon et ainsi de suite, le dernier tronçon étant formé par le tube résiduel qui reste après le tronçonnage de l'avant-dernier tronçon.

8. Procédé de tronçonnage selon la revendication 6, au moyen d'une tronçonneuse munies de plusieurs systèmes de repérage intérieurs (13), où l'opération b) est effectuée de la manière suivante:

b1) régler un premier système de repérage intérieur 13 à une longueur représentant la somme des longueurs des tronçons restant à couper,

b2) régler un deuxième système de repérage intérieur à une distance du premier qui est égale à la longueur désirée d'un tronçon et ainsi de suite jusqu'au dernier système qui est réglé à la longueur du dernier tronçon désiré,

b3) couper une chute résiduelle par repérage sur le premier système,

b4) tronçonner les divers tronçons en avançant le poussoir dont les arrêts sont commandés par chacun des systèmes de repérage qui se suivent.

9. Procédé de tronçonnage selon l'une des revendications 6 à 8, où le tube (29) à tronçonner est mis en rotation seulement après: son blocage en position sur une partie de fixation et de rotation (3) du mandrin (1), la mise hors pression du poussoir (8) et l'escamotage de la butée extérieure (11) lorsque celle-ci est utilisée.

Claims

1. A tube cutter comprising a supporting mandrel (1), a means (3) for rotational entrainment of the tube (29) to be cut, at least one knife (7) disposed fixed longitudinally in the vicinity of the free end of the mandrel, a pusher (8) mounted so as to slide of which in relation to the knife is adjustable, said cutter being characterised in that it additionally comprises at least one internal marking system (13) which is provided with a device which is mounted so that it can be moved and adjusted in its longitudinal position in front of a measuring means (15, 16) to produce known and adjustable lengths between the front end of the pusher (8) and the knife (7), this marking system also being provided with means for stopping the longitudinal movement of the pusher so as to produce at least one section of selected length and a last section one of the cut edges of which coincides with one of the cut edges at the end of the tube (29) to be cut.

2. A cutter as in claim 1, characterised in that the marking system (13) also comprises at least one microswitch (23) or respectively one projection designed to co-operate with a projection (27) or a microswitch respectively locked in translation to the pusher (8) to command the stoppage of the means of entrainment of the latter.

3. A cutter as in claim 2, characterised in that the mobile device of the marking system comprises two successive microswitches (23 and 24) in the direction of advance of the pusher (8) or two projections respectively, the microswitch (24) closest to said pusher (8) being designed to command a slow advance of said pusher and the other (23) the stoppage of the means of entrainment of the latter.

4. A cutter as in one of claims 2 and 3, characterised in that the mobile device of the marking system (13) additionally comprises a stop (21) which may be retractable and is disposed so that a projecting part (25) of the pusher (8) comes into contact with said stop slightly after the co-operation of the means (23, 27) for stopping the means of entrainment of the pusher (8), delaying means being provided to delay the stop command slightly.

5. A cutter as in one of claims 1 to 4, characterised in that it comprises a plurality of internal marking systems (13).

6. A method for cutting tubes by means of a cutter comprising a supporting mandrel (1), a means (3) for rotational entrainment of the tube (29) to be cut, a least one knife (7), a pusher (8) mounted so as to slide on the mandrel to push the tube, an external stop (11) the distance of which in relation to the knife is adjustable, and at least one internal marking system (13) producing known and adjustable lengths between the front end of the pusher (8) and the knife (7), said method consisting in:

a) cutting one or more sections as necessary by marking the lengths by means of the external stop (11),

b) cutting at least the last section by marking the length by means of the internal marking system (13).

7. A cutting method as in claim 6, which the operation b) consists in cutting a residue by marking by means of the internal marking system (13), adjusting said system to a length representing the sum of the lengths of the sections remaining to be cut, and each time cutting a section by moving the marking system towards the end of the mandrel (1) by a length equal to the desired length of a section and so on, the last section being formed by the residual tube which remains after cutting the penultimate section.

8. A cutting method as in claim 6, by means of a cutter fitted with a plurality of internal marking systems (13), in which the operation b) is carried out in the following manner:

b1) adjusting a first internal marking system (13) to a length representing the sum of the lengths of the sections remaining to be cut,

b2) adjusting a second internal marking system to a distance from the first which is equal to the desired length of a section and so on until the last system which is adjusted to the length of the last section desired,

b3) cutting a residue by marking on the first system,

b4) cutting the various sections by advancing the pusher the stoppages of which are commanded by each of the successive marking systems.

9. A cutting method as in one of claims 6 to 8, in which the tube (29) to be cut is only set in rotation after it has been locked in position on a fixing and rotating part (3) of the mandrel (1), the pusher (8) has been relaxed and, when this is used, the external stop (11) has been retracted.

**Patentansprüche**

1. Rohrschneidevorrichtung mit einem Trägerdorn (1), einem Antrieb (3), um das zu schneidende Rohr (29) in Rotation zu versetzen, mindestens einem in der Nähe des freien Endstückes des Dornes in Längsrichtung fest angeordneten Schneidgerät (7), einem zum Schieben des Rohres verschiebbar auf dem Dorn montierten Stößel (8) und einem äußeren Anschlag (11), dessen Abstand zum Schneidgerät einstellbar ist, dadurch gekennzeichnet, daß die Rohrschneidevorrichtung außerdem mindestens ein inneres Bezugssystem (13) umfaßt, das mit einer beweglich montierten und in der Längsposition vor einer Messeinrichtung (15, 16) einstellbaren Einrichtung versehen ist, um bekannte und einstellbare Längen zwischen dem vorderen Ende des Stößels (8) und dem Schneidgerät (7) zu bestimmen, wobei dieses Bezugssystem auch mit einer Einrichtung zum Anhalten der Längsverschiebung des Stößels in der Art ausgestattet ist, daß mindestens ein Abschnitt gewählter Länge sowie ein letzter Abschnitt bestimmt werden, wobei einer der Abschnitte mit einem der Abschnitte am Ende des zu schneidenden Rohres (29) zusammenfällt.

2. Schneidevorrichtung nach Anspruch 1, dadurch gekennzeichnet, daß das Bezugssystem (13) auch mit mindestens einem Mikrokontakt (23) bzw. einem Vorsprung versehen ist, der bestimmt ist, mit einem Vorsprung (27) bzw. einem Mikrokontakt zusammenzuarbeiten, der hinsichtlich der Translationsbewegung des Stößels fest an diesem angebracht ist, um den Antrieb des letzteren abzuschalten.

3. Schneidevorrichtung nach Anspruch 2, dadurch gekennzeichnet, daß die bewegliche Einrichtung des Bezugssystems zwei Mikrokontakte (23 und 24), die im Sinne der Vorbeugung der des Stößels (8) aufeinanderfolgen, bzw. zwei Vorsprünge aufweist, wobei der dem genannten Stößel (8) nächste Mikrokontakt (24) dazu bestimmt ist, ein langsames Vorbewegen des Stößels und der andere (23) das Abschalten des Antriebs des Stößels zu bewirken.

4. Schneidevorrichtung nach einem der Ansprüche 2 und 3, dadurch gekennzeichnet, daß die bewegliche Einrichtung des Bezugssystems (13) außerdem einen gegebenenfalls einziehbaren Anschlag (21) aufweist, der so geführt ist, daß ein Teil eines Vorsprungs (25) des Stößels (8) nach dem Zusammenwirken der Abschalteinrichtung (23, 27) des Antriebs des Stößels (8) leicht mit dem genannten Anschlag in Kontakt kommt, wobei ein Zeitrelais vorgesehen ist, um das Abschaltsignal geringfügig zu verzögern.

5. Schneidgerät nach einem der Ansprüche 1 bis 4, dadurch gekennzeichnet, daß es mehrere innere Bezugssysteme (13) aufweist.

6. Verfahren zum Schneiden von Rohren mit einer Schneidevorrichtung, die einen Trägerdorn (1), einen Antrieb (3), um das zu schneidende Rohr (29) in Rotation zu versetzen, mindestens ein Schneidgerät (7), einen zum Schieben des Rohres verschiebbar auf dem Dorn montierten Stößel (8), einen äußeren Anschlag (11), dessen Abstand zum Schneidgerät einstellbar ist, und mindestens ein inneres Bezugssystem (13) umfaßt, das bekannte und einstellbare Längen zwischen dem vorderen Ende des Stößels (8) und dem Schneidgerät (7) bestimmt, wobei das Verfahren besteht aus:

a) gegebenenfalls Schneiden von einem oder mehreren Abschnitten durch Bestimmen der Längen mittels des äußeren Anschlags (11),

b) Schneiden von mindestens dem letzten Abschnitt durch Bestimmen der Länge mittels des inneren Bezugssystems (13).

7. Verfahren zum Schneiden nach Anspruch 6, wobei die Stufe b) darin besteht, daß man unter Ermitteln mit dem inneren Bezugssystem (13) ein Abfallstück abschneidet, man das genannte System auf eine Länge einstellt, die die Summe der Längen der verbleibenden, zu schneidenden Abschnitte darstellt und man jedes Mal einen Abschnitt abschneidet, wobei man das Bezugssystem um eine Länge gegen das Ende des Dorns (1) verschiebt, die der gewünschten Länge für den Abschnitt entspricht usw., wobei der letzte Abschnitt durch den Rohrrest gebildet wird, der nach dem Abschneiden des vorletzten Abschnittes verbleibt.

8. Verfahren zum Schneiden nach Anspruch 6 mittels einer Schneidevorrichtung, die mit mehreren inneren Bezugssystemen (13) versehen ist, wobei die Stufe b) folgendermaßen ausgeführt wird:

b1) Einstellen eines ersten inneren Bezugssystems (13) auf eine Länge, die der Summe der Längen der verbleibenden, zu schneidenden Abschnitte entspricht,

b2) Einstellen eines zweiten Bezugssystems auf einen Abstand vom ersten Bezugssystem, der gleich der erwünschten Länge eines Abschnittes ist usw., bis zu letzterem System, das auf eine Länge des letzten erwünschten Abschnittes eingestellt ist,

b3) Schneiden eines restlichen Abfallstückes durch Bestimmen auf dem ersten System, b4) Schneiden der verschiedenen Abschnitte durch Vorschieben des Stößels, dessen Halte durch jedes der aufeinanderfolgenden Bezugssysteme bewirkt werden.

9. Verfahren zum Schneiden nach einem der Ansprüche 6 bis 8, wobei das zu schneidende Rohr (29) erst dann in Rotation versetzt wird, wenn es auf einem Feststellungs- und Rotationsteil (3) des Dornes (1) blockiert ist, der Stößel (8) außer Eingriff gesetzt ist und der äußere Anschlag (11), falls ein solcher benutzt wird, eingezogen ist.

7

Fig.1

Fig. 2